# EUROPÄISCHE PATENTSCHRIFT

(11) **EP 1 992 547 B1**
(45) Veröffentlichungstag und Bekanntmachung des Hinweises auf die Patenterteilung: **01.02.2012**
(21) Anmeldenummer: 08103523.0
(22) Anmeldetag: 14.04.2008
(51) Int. Cl.: B62D 5/04

(54) **Verfahren zur Prüfung eines Verriegelungszustands einer mechanischen Sperre eines Elektromotors**
Method for testing the locking status of a mechanical catch of an electromotor
Procédé de vérification d'un état de verrouillage d'un blocage mécanique d'un moteur électrique

(30) Priorität: 16.05.2007 DE 102007023082
(43) Veröffentlichungstag der Anmeldung: 19.11.2008
(73) Patentinhaber: ZF-Lenksysteme GmbH, 73527 Schwäbisch Gmünd (DE)
(72) Erfinder: Irtenkauf, Timo, 73529 Schwäbisch Gmünd (DE); Müller, Gerd, 73540 Heubach (DE)

(56) Entgegenhaltungen:
- EP-A2- 1 544 076
- DE-A1- 10 323 042

## Beschreibung

### Technisches Gebiet

Die Erfindung betrifft ein Verfahren zur Prüfung eines Verriegelungszustands einer mechanischen Sperre eines Elektromotors, welcher als Überlagerungswinkelsteller in einem Überlagerungslenksystem ausgebildet ist. Die Erfindung betrifft ebenfalls ein Verfahren zur gezielten Verriegelung einer derartigen mechanischen Sperre.

### Stand der Technik

Ein Lenksystem mit Überlagerungsmiftelti ist aus der DE 197 51 125 A1 bekannt. Dort wird die Bewegung (Zusatzwinkel bzw. Motorwinkel) eines Stellantriebs, d. h. eines Elektromotors mittels eines Überlagerungsgetriebes (beispielsweise ein Planetengetriebe) mit dem Lenkradwinkel überlagert. Mit Hilfe der Überlagerungsmittel ist es möglich, einen von der Lenkhandhabe vorgegebenen Lenkradwinkel zur Erhöhung der Fahrstabilität bzw. des Komforts mit einem Zusatzwinkel bzw. Überlagerungswinkel zu überlagern, so dass sich fahrdynamikabhängig bzw. komfortabhängig ein variables Übersetzungsverhältnis zwischen Lenkradwinkel und mittlerem Radlenkwinkel der lenkbaren Räder des Kraftfahrzeugs einstellt Dadurch ist es sicherheitstechnisch z. B. möglich, ein Kraftfahrzeug, welches auszubrechen droht, durch eine entsprechende Korrektur des Radlenkwinkels wieder in eine stabile Fahrsituation zurückzuführen. Die Überlagerutigsmittel können andere Fahrdynamiksysteme (z. B. ein elektronisches Stabilitätsprogramm (ESP) oder ein Antiblockiersystem (ABS)) unterstützen. Komforttechnisch ist es auch möglich, einem Lenkradwinkel beispielsweise einen geschwindigkeitsabhängigen Zusatzwinkel zu überlagern. Dadurch kann bei niedrigen Fahrzeuggeschwindigkeiten ein relativ kleines Übersetzungsverhältnis eingestellt werden, d. h. eine relativ kleine Drehung der Lenkhandhabe führt zu einem relativ großen Lenkwinkel der Räder (gegenüber der mechanischen Grundübersetzung direkteres Übersetzungsverhältnis). Bei hohen Fahrzeuggeschwindigkeiten kann dagegen ein relativ großes Übersetzungsverhältnis (gegenüber der mechanischen Grundübersetzung indirekteres Übersetzungsverhältnis) eingestellt werden, damit sich die Fahrstabilität des Kraftfahrzeugs erhöht.

Im deaktivierten Zustand der Überlagerungsmittel derartiger Überlagerungslenksysteme (beispielsweise, wenn das Kraftfahrzeug abgeschleppt wird) ist es notwendig, den Überlagerungswinkel- bzw. Zusatzwinkelsteller zu blockieren bzw. mechanisch zu sperren, damit eine Lenkbewegung an der Lenkhandhabe eine der mechanischen Übersetzung des Lenkgetriebes entsprechende Lenkbewegung der lenkbaren Räder zur Folge hat und nicht über das Überlagerungsgetriebe in den Überlagerungswinkelsteller gelenkt wird.

Ohne eine derartige Sperrung bzw. Blockierung des Überlagerungswinkelstellers wären darüber hinaus, wenn das Lenkrad verdreht wurde, die Nutzfunktionen des Übedagerungslenksystems, insbesondere die variable Lenkübersetzung, zunächst nur eingeschränkt einsetzbar, da der beim Abschalten des Systems fixierte bzw. abgespeicherte Ist-Überlagerungswinkel des Überlagerungswinkelstellers der Überlagerungsmittel nicht mit dem Soll-Überlagerungswinkel beim Wiedereinschalten übereinstimmt und hierdurch ein unerwünschter Motorwinkelsprung entstehen würde.

Aus der Praxis ist bekannt, den Rotor des Überlagerungswinkelstellers bzw. Elektromotors mit einem sogenannten Sperrenring zu versehen, welcher Aussparungen bzw. Bohrungen oder Nuten aufweist. Zur Verriegelung des Rotors bzw. des Elektromotors wird ein an diese Aussparungen angepasster in Drehrichtung des Rotors fixierbarer Stift seitlich des Rotors eingebracht, welcher dann bei einer weiteren zufälligen Verdrehung der Lenkung bzw. des Rotors in eine der Aussparungen einhakt bzw. einrastet.
Die DE 103 23 042 A1 offenbart eine Hilfskraftlenkung mit einem Überlagerungsgetriebe, bei dem in Abhängigkeit von Stellgrößen, die einen Betriebszustand des Fahrzeugs wiedergeben, eine mechanische Verriegelung des Überlagerungsgetriebes vorgenommen wird. Hierzu wird ein angetriebener Planetenträger, der eine verzahnte Hülse aufweist, mittels eines elektromagnetisch betätigten Stifts blockiert.

In der EP 1 544 076 A2 wird eine Überlagerungssteller-Einheit vorgeschlagen, bei der ein Differenz-Winkel zwischen einer Ein- und Ausgangswelle erfasst wird und daraus ein absoluter Drehwinkel berechnet und in einen nicht-flüchtigen Speicher abgelegt wird. Dabei sind Versorgungsmittel vorgesehen, welche eine Versorgungsspannung für eine Kontroll-Einheit zur Verfügung stellen, die die abgegebene Spannung eines Generators und einer Batterie derart begrenzt, dass ein vorgegebener Wert nicht überschritten wird, für den Fall, dass Generator und Batterie normal arbeiten. Des weiteren ist es vorgesehen, dass eine Erregerspule eines elektromechanischen Sperrelements derart bestromt wird, dass das Sperrelement sofort den Betrieb eines elektrischen Stellmotors des Überlagerungsstellers blockiert, parallel hierzu wird der momentan ermittelte absolute Drehwinkel gespeichert, sofern ein weiteres vorgegebenes Spannungsniveaus vorliegt.

### Offenbarung der Erfindung

Ausgehend davon liegt der vorliegenden Erfindung die Aufgabe zugrunde, den Betrieb einer mechanischen Sperre bzw. einer Blockiereinrichtung eines Überlagerungswinkelstellers in einem Überlagerungslenksystem zuverlässiger zu gestalten bzw. zu verbessern.

Diese Aufgabe wird erfindungsgemäß durch Anspruch 1 gelöst.

Erfindungsgemäß wird ein Verfahren zur Prüfung eines Verriegelungszustands einer mechanischen Sperre eines Elektromotors, welcher als Überlagerungswinkelsteller in einem Überlagerungslenksystem ausgebildet ist, vorgeschlagen, wobei der Rotor des Elektromotors einen Sperrenring mit Verriegelungsvorsprüngen und Verriegelungsaussparungen aufweist, in welchen ein angepasster fixierbarer Sperrenstift des Elektromotors zur Realisierung der mechanischen Sperre einbringbar ist. Zur Prüfung des Verriegelungszustands der mechanischen Sperre wird bei eingebrachtem Sperrenstift versucht, den Rotor in einer vorgegebenen Drehrichtung solange in eine neue Soll-Lage zu drehen bis sich eine ermittelte Ist-Lage des Rotors trotz Anforderung einer neuen Soll-Lage des Rotors nicht mehr verändert und der Motorstrom des Elektromotors größer oder gleich einem vorgegebenen Motorstromschwellwert ist, wobei die momentane Ist-Lage des Rotors laufend ermittelt wird, wobei ein korrekter Verriegelungszustand erkannt wird, falls die während der Drehung des Rotors entstandene Winkeldifferenz bzw. Änderung der Ist-Lage des Rotors betragsmäßig kleiner als ein vorgegebener erster Schwellwert ist und wobei ein fehlerhafter Verriegelungszustand erkannt wird, falls die während der Drehung des Rotors entstandene Winkeldifferenz bzw. Änderung der Ist-Lage des Rotors betragsmäßig größer oder gleich einem vorgegebenen zweiten Schwellwert ist. Durch diese Maßnahmen wird ein sicherer Betrieb der mechanischen Sperre bzw. Blockiereinrichtung gewährleistet. Vor jedem Start kann getestet werden, ob die mechanische Sperre das System, bzw. den Elektromotor im Notfall verriegeln kann. Die mechanische Sperre wird dadurch wesentlich zuverlässiger. Ein Verriegelungsstatus bzw. eine Blockietwirkung kann komfortabel und sicher getestet werden. Während des Tests ist der Sperrenmagnet nicht bestromt, d. h. der Sperrenstift ist in Verriegelungsposition.

Beim Aufstarten können bezüglich der Position des Sperrenstifts im Wesentlichen zwei Fälle auftreten. Zum einen kann sich der Sperrenstift in einer Verriegelungstasche befinden. Dies ist der Normatfall. Des weiteren besteht die Möglichkeit, dass sich der Sperrenstift in einer beliebigen anderen Position befindet. Dann hat sich der Sperrenstift aus der Verriegelungstasche gelöst bzw. ist eine Notabschaltung des Systems ohne gezielte Positionierung des Sperrenstifts erfolgt.

Bei einer entsprechenden Geometrie des Sperrenrings kann als erster Schwellwert vorzugsweise 105° und als zweiter Schwellwert vorzugsweise 150° vorgegeben werden.

Ist die entstandene Änderung der Ist-Lage des Rotors bzw. dessen Drehwinkel betragsmäßig kleiner als 105°, so ist der Sperrentest bestanden und das System kann aufstarten. Ist der Drehwinkel betragsmäßig größer oder gleich 150°, so ist der Sperrentest nicht bestanden und das System darf nicht mehr starten. Der entdeckte mechanische Fehler muss entsprechend vermerkt werden. Das System darf auch nach einem Neustart bzw. Klemmenwechsel nicht wieder aufstarten.

Erfindungsgemäß kann vorgesehen sein, dass, falls die während der Drehung des Rotors entstandene Winkeldifferenz bzw. Änderung der Ist-Lage des Rotors betragsmäßig größer oder gleich dem ersten Schwellwert und kleiner als der zweite Schwellwert ist, der Sperrenstift aus dem Sperrenring entfernt wird, wonach der Rotor entgegen der Drehrichtung um wenigstens annähernd 180° zurückgedreht wird, wonach der Sperrenstift erneut in den Sperrenring eingebracht wird und wonach das Verfahren erneut durchgeführt wird.

Ist der Drehwinkel somit betragsmäßig größer oder gleich 105° und kleiner als 150° kann nicht sicher unterschieden werden, ob der Sperrenstift auf einem Verriegelungsvorsprung bzw. Verriegelungszahn steht oder dieser gebrochen ist. Deshalb muss in diesem Fall der Sperrenstift aus der Sperrverzahnung d. h. dem Sperrenring gezogen werden und der Rotor um 180° zurückgedreht werden (entgegen der Drehrichtung des Sperrentests). Anschließend wird der Sperrenstift abgesetzt und der Sperrentest wiederholt. Stand der Sperrenstift auf einem Verriegelungsvorsprung, und der Sperrenstift ist beim Verdrehen bei dem nächsten Verriegelungsvorsprung verriegelt bzw. fixiert worden, war dieser Verriegelungsvorsprung in Ordnung und es wird anschließend der vorhergehende Verriegelungsvorsprung getestet. Stand der Sperrenstift direkt vor einem defekten Verriegelungsvorsprung, wird der Sperrenstift vor dem defekten Verriegelungsvorsprung positioniert und nochmals getestet, Ist der Drehwinkel dann betragsmäßig größer oder gleich 150° so ist der Sperrentest nicht bestanden.

Vorteilhaft ist es, wenn bei jeder wiederholten Durchführung des Verfahrens jeweils die entgegengesetzte Drehrichtung des Rotors gewählt wird, welche aus einer bei dem Verriegeln abgespeicherten Verriegelungsrichtung des Elektromotors bestimmt wird. Die Drehrichtung in welche beim Sperrentest gedreht werden muss, kann beim Verriegeln bestimmt werden. Beim erstmaligen Aufstarten des Systems wird unter Umständen gegen die kurze Kante der Verriegelungsaussparung bzw. Verriegelungstasche getestet, anstatt gegen einen Verriegelungsvorsprung. Nach dem erstmaligen Verriegeln wird jedoch nur noch gegen einen Verriegelungsvorsprung getestet. D. h. es wird dieselbe Richtung getestet, in die auch verriegelt wurde. Durch diese Maßnahmen wird eine gleichmäßige Abnutzung bzw. Belastung der mechanischen Komponenten erreicht.

Die momentane Ist-Lage des Rotors kann mittels eines Rotorlagesensors, insbesondere mittels Hall-Sensoren als Hall-Bitmuster ermittelt und mit einer bei dem Verriegeln abgespeicherten Ist-Lage des Rotors, insbesondere einem Hall-Bitmuster verglichen werden. Bei Vorhandensein einer Differenz zwischen der momentanen Ist-Lage des Rotors und dessen bei dem Verriegeln abgespeicherter Ist-Lage kann
- in einem ersten Fall, wenn die Differenz kleiner oder gleich einem vorgegebenen dritten Schwellwert ist, die Differenz zu der bei dem Verriegeln abgespeicherten Ist-Lage des Rotors addiert bzw. diese um die Differenz erhöht werden, oder
- in einem zweiten Fall, wenn die Differenz größer als der vorgegebene dritte Schwellwert ist, eine Initialisierungsfahrt bzw. eine Initialisierung des Überlagerungslenksystems durchgeführt werden.

Da keine feste mechanische Zuordnung von Hall-Patterns bzw. Hall-Bitmustern zu Verriegelutigsaussparungen vorgesehen ist, kann es durch mechanische Toleranzen zu einer Änderung des Hall-Bitmusters kommen auch wenn das System verriegelt ist. Dies geschieht insbesondere dann, wenn bei einem verriegelten System einer der vorgesehenen Hallsensoren exakt auf der Grenze zwischen 2 Polen eines Sensormagnetrings des Elektromotors zu stehen kommt. Diese tolerierte Änderung des Hall-Bitmusters kann dabei allerdings nur einer Winkeländerung, weiche kleiner oder gleich einem dritten Schwellwert vorzugsweise höchstens maximal 15° (abhängig von der Anzahl und dem Abstand der Hall-Sensoren) entsprechen.

Als vorgegebener Motorstromschwellwert kann der maximale Motorstrom des Elektromotors gewählt werden.

Nach einer Erkennung eines korrekten Verriegelungszustands kann die momentane Ist-Lage des Rotors, welche der Position einer Verriegelungsaussparung entspricht, ermittelt und abgespeichert werden.

In Anspruch 8 ist ein Verfahren zur gezielten Verriegelung der mechanischen Sperre des Elektromotors angegeben. Dadurch wird eine präzise und zuverlässige Verriegelung ermöglicht. Da der Rotor nun in vorteilhafter Weise beim Herunterfahren des Systems - sozusagen spielfrei - blockiert wird, kann der Motorwinkel im passiven Zustand des Systems (z. B. im Fehlerfall, beim Abstellen des Kraftfahrzeugs oder beim Abschleppen) nicht mehr durch Drehen am Lenkrad verändert werden.

Bei jeder wiederholten Durchführung des Verfahrens zur gezielten Verriegelung der mechanischen Sperre kann jeweils die entgegengesetzte Verriegelungsrichtung des Rotors gewählt werden, wobei die aktuell gewählte Verriegelungsrichtung, insbesondere in einem EEPROM-Speicher abgespeichert wird. Durch diese Maßnahmen wird eine gleichmäßige Abnutzung bzw. Belastung der mechanischen Komponenten erreicht.

Die momentane Ist-Lage des Rotors wird, insbesondere als Hall-Bitmuster abgespeichert.

Die erfindungsgemäßen Verfahren sind vorzugsweise im Rahmen eines Verfahrens zum Betrieb eines Überlagerungsletiksystems vorzugsweise als Computerprogramm auf einem Steuergerät des Überlagerutigslenksystems bzw. elektronischen Servolenksystems realisiert. Dazu ist das Computerprogramm in einem Speicherelement eines Steuergeräts gespeichert. Durch Abarbeitung auf einem Mikroprozessor des Steuergeräts wird das Verfahren ausgeführt. Das Computerprogramm kann auf einem computerlesbaren Datenträger (Diskette, CD, DVD, Festplatte, USB-Memorystick oder dergleichen) oder einem Internetserver als Computerprogrammprodukt gespeichert sein und von dort aus in das Speicherelement des Steuergeräts übertragen werden. Ein derartiges Computerprogramm bzw. Computerprogrammprodukt mit Programmcodemitteln ist in Anspruch 12 bzw. Anspruch 13 angegeben.

Anspruch 14 betrifft ein Überlagerungslenksystem eines Kraftfahrzeugs.

Weitere vorteilhafte Ausgestaltungen und Weiterbildungen der Erfindung ergeben sich aus den übrigen Unteransprüchen. Nachfolgend ist anhand der Zeichnung prinzipmäßig ein Ausführungsbeispiel der Erfindung angegeben.

### Kurze Beschreibung der Zeichnungen

Es zeigt:

Fig. 1 eine vereinfachte schematische Darstellung eines Überlagerungslenksystems, bei welchem ein erfindungsgemäßes Verfahren zum Einsatz kommt:

Fig. 2 eine Draufsicht auf einen Sperrenring für einen Rotor eines als Überlagerungswinkelsteller ausgebildeten Elektromotors;

Fig. 3 eine vereinfachte seitliche Ansicht eines Rotors mit einem Sperrenring und einem Sperrenstift;

Fig. 4 eine Prinzipdarstellung eines erfindungsgemäßen Verfahrens zur Prüfung eines Verriegelungszustands mit bestandenem Sperrentest;

Fig. 5 eine Prinzipdarstellung eines erfindungsgemäßen Verfahrens zur Prüfung eines Verriegelungszustands mit nicht eindeutigem Sperrentest;

Fig. 6 eine weitere Prinzipdarstellung eines erfindungsgemäßen Verfahrens zur Prüfung eines Verriegelungszustands mit nicht eindeutigem Sperrentest;

Fig. 7 eine Prinzipdarstellung eines erfindungsgemäßen Verfahrens zur Prüfung eines Verriegelungszustands mit nicht bestandenem Sperrentest;

Fig. 8 eine Prinzipdarstellung einer ersten Möglichkeit einer Positionierung eines Rotors bzw. eines Sperrenstifts;

Fig. 9 eine Prinzipdarstellung einer zweiten Möglichkeit einer Positionierung eines Rotors bzw. eines Sperrenstifts; und

Fig. 10 eine Prinzipdarstellung eines erfindungsgemäßen Verfahrens zur gezielten Verriegelung einer mechanischen Sperre mit Verfahrwegen zum Positionieren und Verriegeln.

### Ausführungsform(en) der Erfindung

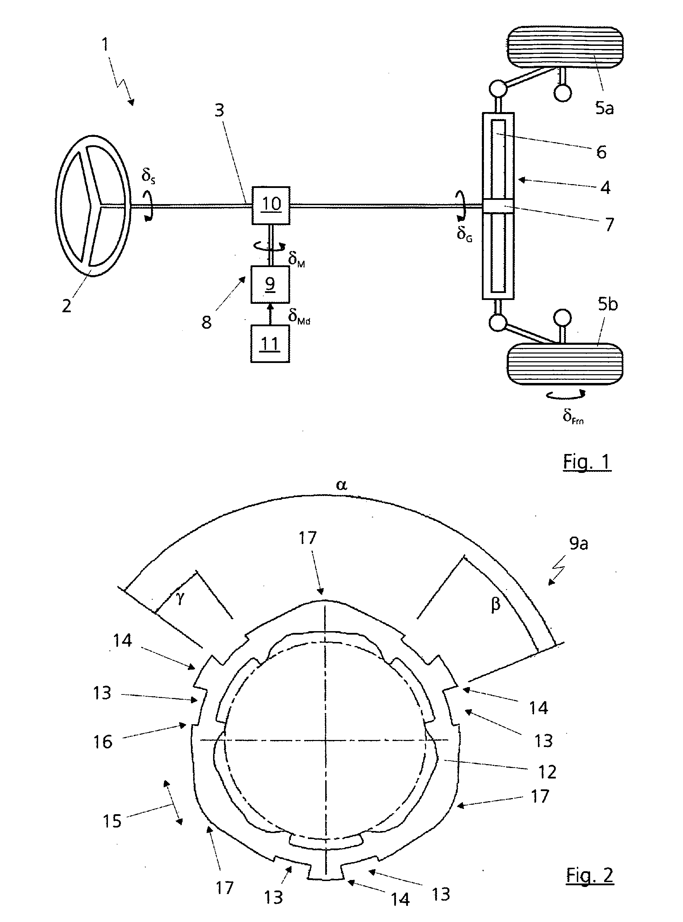

Fig. 1 zeigt ein als Überlagerungsletiksystem 1 ausgebildetes elektronisches Servolenksystem eines nicht dargestellten Kraftfahrzeugs, Das Überlagerungslenksystem 1 weist eine als Lenkrad 2 ausgebildete Lenkhandhabe auf. Das Lenkrad 2 ist über eine Gelenkwelle bzw. Lenksäule 3 mit einem Lenkgetriebe 4 verbunden. Das Lenkgetriebe 4 dient dazu, einen Drehwinkel der Lenksäule 3 in einen Radlenkwinkel δ_{Fm} von lenkbaren Rädern 5a, 5b des Kraftfahrzeugs umzusetzen. Das Lenkgetriebe 4 weist eine Zahnstange 6 und ein Ritzel 7 auf, an welches die Lenksäule 3 angreift. Das Überlagerungslenksystem 1 umfasst darüber hinaus Überlagerungsmittel 8, die einen als Elektromotor 9 ausgebildeten Stellantrieb bzw. Überlagerungswinkelsteller und ein von diesem angetriebenes Übertagerungsgetriebe 10 aufweisen. Das Überlagerungsgetriebe 10 ist als Planetengetriebe ausgebildet. In weiteren Ausführungsbeispielen könnte das Überlagerungsgetriebe 10 auch als Wellgetriebe oder dergleichen ausgebildet sein. Durch das Lenkrad 2 wird ein Lenkradwinkel δ_{S} als Maß für einen gewünschten Radlenkwinkel δ_{Fm} der lenkbaren Räder 5a, 5b des Kraftfahrzeugs vorgegeben. Mit Hilfe des Elektromotors 9 wird dann ein Zusatzwinkel bzw. Überlagerungswinkel δ_{M} generiert und durch das Überlagerungsgetriebe 10 mit dem Lenkradwinkel δ_{S} bzw. dem Drehwinkel der Lenksäule 3 Überlagert. Der Übertagerungswinkel δ_{M} wird grundsätzlich zur Realisierung von Nutzfunktionen, insbesondere zur Verbesserung der Fahrdynamik des Kraftfahrzeugs bzw. des Komforts, insbesondere durch Bereitstellung einer variablen Lenkübersetzung bzw. einem variablen Übersetzungsverhältnis zwischen Lenkradwinkel δ_{S} und Radlenkwinkel δ_{Fm} der lenkbaren Räder 5a, 5b, erzeugt. Die Summe aus Lenkradwinkel δ_{S} und Überlagerungswinkel δ_{M} ergibt den Eingangswinkel des Lenkgetriebes 4 bzw. im vorliegenden Ausführungsbeispiel den Ritzelwinkel δ_{G}.

Die Überlagerungsmittel 8 weisen ein elektronisches Steuergerät 11 auf, welches unter anderem der Regelung des Überlagerungswinkels δ_{M} und des abgegebenen Moments des Elektromotors 9 dient. Auf dem elektronischen Steuergerät 11 läuft dazu ein Regelungsverfahren ab, welches als Regelungsstruktur bzw. als Computerprogramm auf einem nicht dargestellten Mikroprozessor des Steuergeräts 11 ausgeführt ist. Der Elektromotor 9 wird mit einem elektrischen Ansteuersignal δ_{Md,} welches dem Sollwert des von dem Elektromotor 9 zu erzeugenden Überlagerungswinkels δ_{M}, also dem Soll-Überlagerungswinkel entspricht, angesteuert. Die Ansteuerung bzw. Regelung des Elektromotors 9 erfolgt üblicherweise in Abhängigkeit von der Fahrzeuggeschwindigkeit des Kraftfahrzeugs, d. h. das variable Übersetzungsverhältnis zwischen dem Lenkradwinkel δ_{S} und dem Ritzelwinkel δ_{G} bzw. dem Radlenkwinkel δ_{Fm} der Räder 5a, 5b wird durch die Überlagerung des Lenkradwinkels δ_{S} mit verschiedenen, geschwindigkeitsabhängigen Überlagerungswinkeln δ_{M} in Abhängigkeit von der Fahrzeuggeschwindigkeit eingestellt. Das Überlagerungslenksystem 1 kann in weiteren nicht dargestellten Ausführungsbeispielen den Überlagerungsmitteln 8 nachgeordnet auch einen elektrischen oder hydraulischen Servoantrieb aufweisen, welcher unter anderem der variablen Momentenunterstützung dient.

Die Überlagerung des Überlagerungswinkels δ_{M} ist mechanisch sperrbar (in Fig. 1 nicht dargestellt), da es im deaktivierten Zustand der Überlagerungsmittel 8 (beispielsweise, wenn das Kraftfahrzeug abgeschleppt wird) notwendig ist, den Elektromotor 9 zu blockieren bzw. mechanisch zu sperren, damit eine Lenkbewegung an der Lenkhandhabe 2 eine der mechanischen Übersetzung des Lenkgetriebes 4 entsprechende Lenkbewegung der lenkbaren Räder 5a, 5b zur Folge hat und nicht über das Überlagerungsgetriebe 10 in den Elektromotor 9 gelenkt wird. Ohne eine derartige Sperrung bzw. Blockierung des Elektromotors 9 wären darüber hinaus, wenn das Lenkrad 2 verdreht würde, die Nutzfunktionen des Überlagerungslenksystems 1, insbesondere die variable Lenkübersetzung, zunächst nur eingeschränkt einsetzbar, da der beim Abschalten des Systems fixierte bzw. abgespeicherte Ist-Überlagerungswinkel des Elektromotors 9 der Überlagerungsmittel 8 nicht mit dem Soll-Überlagerungswinkel beim Wiedereinschalten übereinstimmt und hierdurch ein unerwünschter Motorwinkelsprung entstehen würde.

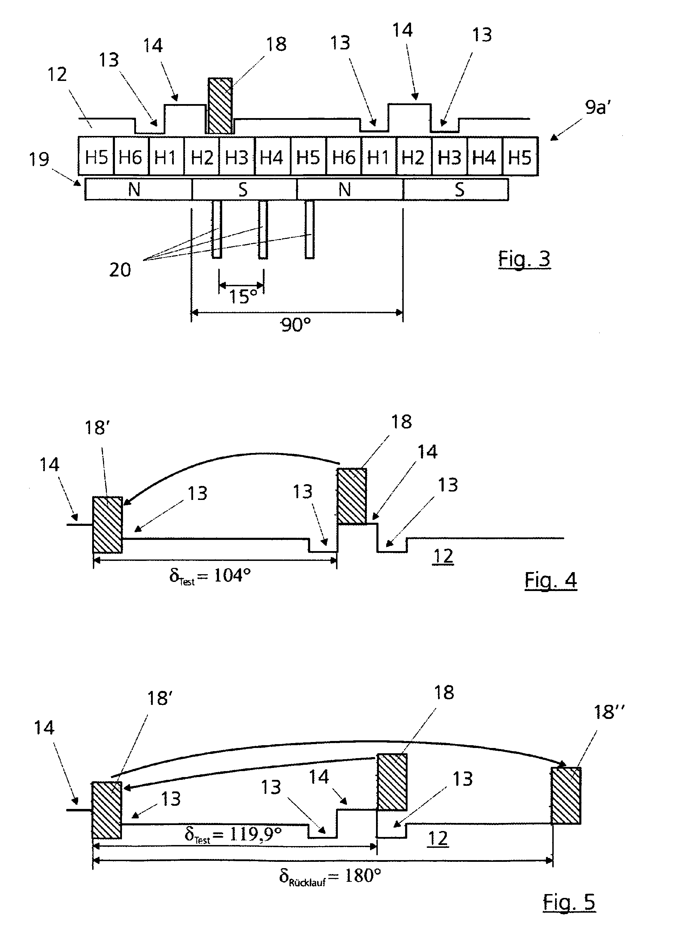

Wie aus Fig. 2 ersichtlich, weist als mechanische Sperre ein Rotor 9a des Elektromotors 9 ein ringförmiges Element, d. h. einen Sperrenring 12 auf, welcher sechs Verriegelungsaussparungen 13 bzw. Verriegelungstaschen bzw. Nuten und drei Verriegelungsvorsprünge 14 bzw. Verriegelungszähne aufweist. In weiteren nicht dargestellten Ausführungsbeispielen könnte der Rotor die Verriegelungsaussparungen 13 und Verriegelungsvorsprünge 14 auch direkt aufweisen bzw. selbst als Sperrenring ausgebildet sein. Zur Verriegelung des Rotors 9a bzw. des Elektromotors 9 wird ein an die Verriegelungsaussparungen 13 und Verriegelungsvorsprünge 14 angepasster in radialer Richtung bzw. in Drehrichtung des Rotors 9a (in Fig. 2 vereinfacht durch den Doppelpfeil 15 angedeutet) fixierbarer Sperrenstift (siehe Fig. 3) seitlich in den Sperrenring 12 des Rotors 9a eingebracht, welcher dann, insbesondere bei einer weiteren zufälligen Verdrehung der Lenkung bzw. des Rotors 9a, in eine der Verriegelungsaussparungen 13 einhakt bzw. einrastet.

Die drei Verriegelungsvorsprünge 14 sind gleichmäßig um den Sperrenring 12 in einem Abstand bzw. Winkel α von jeweils 120° zueinander angeordnet sind, wobei auf beiden Seiten der Verriegelungsvorsprünge 14 jeweils eine Verriegelungsaussparung 13 angeordnet ist. Dementsprechend sind die Verriegelungsaussparungen 13 auf einer Seite durch die Verriegelungsvorsprünge 14 und auf der anderen Seite durch kürzere Kanten 16 begrenzt. Des weiteren weist der Sperrenring 12 Erhebungen 17 zum sicheren und einfachen Absetzen des Sperrenstifts auf. Der Winkel β beträgt im vorliegenden Ausführungsbeispiel 30,8°. Der Winkel γ beträgt vorzugsweise 15,9°. Die Winkel β und γ beziehen sich auf sämtliche Verriegelungsaussparungen bzw. -vorsprünge. Selbstverständlich kommen in weiteren nicht dargestellten Ausführungsbeispielen auch andere Geometrien für den Sperrenring in Frage, insbesondere können auch andere Anzahlen von Verriegelungsaussparungen und Verriegelungsvorsprüngen vorgesehen sein.

In Fig. 3 ist ein rotierender Teil 9a' des Rotors 9a dargestellt. Ein Sperrenstift 18 ist in eine der Verriegelungsaussparungen 13 des Sperrenrings 12 eingebracht. An dem Sperrenring 12 ist ein Magnetring 19 mit Nordpolen N und Südpolen S angeordnet. Ein Abschnitt mit einem Südpol S und einem Nordpol N umfasst vorzugsweise einen Winkelbereich von 90° in dem Rotor 9a. Drei Hall-Sensoren 20 sind als Rotorlagesensor in einem Winkelabstand von jeweils vorzugsweise 15° zueinander angeordnet. Somit beträgt die Sensorauflösung der Rotorlage 15°. Mit dem Magnetring 19 erkennen die Hall-Setisoren 20 vereinfacht angedeutete Hall-Bitmuster H1 bis H6, welche bezüglich der Magnetisierung entsprechend drei binäre Ziffern aufweisen. Den Verriegelungsaussparungen 13 ist kein eindeutiges Hall-Bitmuster H1 bis H6 zugeordnet. Der Magnetring 19 ist zu dem Sperrenring 12 nicht bestimmt angeordnet. Die Position der Verriegelungsaussparungen 13 und Verriegelungsvorsprünge 14 ist somit nicht bekannt und kann auch aus akustischen Gründen nicht eingelernt werden. Die Hall-Sensoren 20 sind auf einem nicht dargestellten Gehäuse des Elektromotors 9 fixiert. Der rotierende Teil 9a' des Rotors 9a ist auf die Motorwelle des Elektromotors 9 aufgepresst. Der Sperrenstift 18 wird von einem nicht dargestellten Sperrenmagnet gehalten, wenn er nicht in Verriegelungsposition ist. Der Sperrenmagnet ist dann bestromt.

Die Blockierwirkung der mechanischen Sperre, welche durch den Sperrenring 12 und den Sperrenstift 18 gebildet wird, muss zumindest beim Aufstarten des Systems getestet werden. Dabei ist der Sperrenmagnet nicht bestromt, d. h. der Sperrenstift 18 befindet sich, wie in Fig. 3 gezeigt, in Verriegelungsposition. Erfindungsgemäß wird nun ein Verfahren zur Prüfung des Verriegelungszustands der mechanischen Sperre des Elektromotors 9 vorgeschlagen, wobei der Rotor 9a des Elektromotors 9 den Sperrenring 12 mit den Verriegelungsvorsprüngen 14 und den Verriegelungsaussparungen 13 aufweist, in welchen der angepasste fixierbare Sperrenstift 18 des Elektromotors 9 zur Realisierung der mechanischen Sperre einbringbar ist. Zur Prüfung des Verriegelungszustands der mechanischen Sperre wird bei eingebrachtem Sperrenstift 18 versucht, den Rotor 9a in einer vorgegebenen Drehrichtung solange in eine neue Soll-Lage zu drehen, bis sich eine ermittelte Ist-Lage des Rotors 9a trotz Anforderung einer neuen Soll-Lage des Rotors 9a nicht mehr verändert und der Motorstrom des Elektromotors 9 größer oder gleich einem vorgegebenen Motorstromschwellwert, vorzugsweise 80% des Maximalstroms des Elektromotors 9, ist, wobei die momentane Ist-Lage des Rotors 9a laufend ermittelt wird, wobei ein korrekter Verriegelungszustand erkannt wird, falls die während der Drehung des Rotors 9a entstandene Winkeldifferenz bzw. Änderung der Ist-Lage des Rotors 9a betragsmäßig kleiner als ein vorgegebener erster Schwellwert ist und wobei ein fehlerhafter Verriegelungszustand erkannt wird, falls die während der Drehung des Rotors 9a entstandene Winkeldifferenz bzw. Änderung der Ist-Lage betragsmäßig größer oder gleich einem vorgegebenen zweiten Schwellwert ist. Im vorliegenden Ausführungsbeispiel ist als erster Schwellwert 105° und als zweiter Schwellwert 150° vorgegeben.

Beim Aufstarten können bezüglich der Position des Sperrenstifts 18 im Wesentlichen zwei Fälle auftreten. Zum einen kann sich der Sperrenstift 18 in einer Verriegelungsaussparutig 13 befinden. Dies ist der Normalfall, Des weiteren besteht die Möglichkeit, dass sich der Sperrenstift 18 in einer beliebigen anderen Position befindet. Dann hat sich der Sperrenstift 18 aus der Verriegelungsaussparung 13 gelöst bzw. ist eine Notabschaltung des Systems ohne gezielte Positionierung des Sperrenstifts 18 erfolgt. Bei jeder wiederholten Durchführung des Verfahrens wird jeweils die entgegengesetzte Drehrichtung des Rotors 9a gewählt, welcher aus einer bei dem Verriegeln abgespeicherten Verriegelungsrichtung des Elektromotors 9 bestimmt wird. Die Drehrichtung, in welche beim Sperrentest gedreht werden muss, wird demnach beim Verriegeln vorgegeben. Beim erstmaligen Aufstarten des Systems wird unter Umständen gegen die Kante 16 der Verriegelungsaussparung 13 getestet, anstatt gegen einen Verriegelungsvorsprung 14. Nach dem erstmaligen Verriegeln wird jedoch nur noch gegen die Verriegelungsvorsprünge getestet. Durch diese Maßnahmen wird eine gleichmäßige Abnutzung bzw. Belastung der mechanischen Komponenten erreicht.

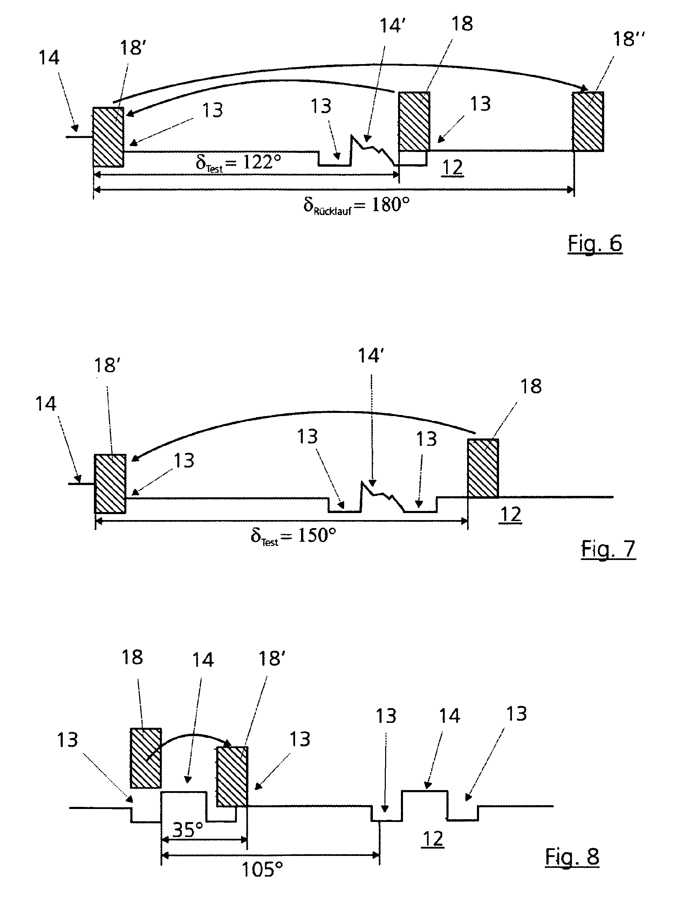

Ist wie in Fig. 4 dargestellt die entstandene Änderung der Ist-Lage des Rotors 9a bzw. dessen Drehwinkel δ_{Test}< 105°, so ist der Sperrentest im vorliegenden Fall mit δ_{Test} = 104° bestanden und das System kann aufstarten. Ist der Drehwinkel δ_{Test} betragsmäßig jedoch größer oder gleich 150°, dann ist der Sperrentest, wie Fig. 7 gezeigt, nicht bestanden und das System darf nicht mehr aufstarten. Der entdeckte mechanische Fehler muss entsprechend im System vermerkt werden. Das System darf auch nach einem Neustart des Kraftfahrzeugs bzw. einem Klemmenwechsel nicht mehr starten. In den Figuren 4 bis 7 ist der Sperrenstift vor dem Sperrentest mit dem Bezugszeichen 18 und nach dem Sperrenstest mit dem Bezugszeichen 18' versehen. Der für den nicht erfolgreichen Sperrentest verantwortliche gebrochene Verriegelungsvorsprung ist mit dem Bezugszeichen 14'versehen.

Falls die während der Drehung des Rotors 9a entstandene Winkeldifferenz δ_{Test} betragsmäßig größer oder gleich 105° und kleiner als 150 ist, kann nicht sicher unterschieden werden, ob der Sperrenstift 18 auf einem Verriegelungsvorsprung 14 stand oder ein Verriegelungsvorsprung 14' gebrochen ist. Deshalb muss in diesem Fall der Sperrenstift 18 aus der Sperrverzahnung bzw. dem Sperrenring 12 gezogen werden und der Rotor 9a um einen Winkel δ_{Rücklauf}= 180° zurückgedreht werden (also entgegen der Drehrichtung des Sperrentests). Anschließend wird der mit dem Bezugszeichen 18" versehene Sperrenstift abgesetzt und der Sperrentest wiederholt. Stand der Sperrenstift 18 auf einem Verriegelungsvorsprung 14 und ist beim Verdrehen bei dem nächsten Verriegelungsvorsprung 14 verriegelt bzw. fixiert worden, dann war dieser Verriegelungsvorsprung 14 in Ordnung und es wird anschließend der vorhergehende Verriegelungsvorsprung getestet (siehe Fig. 5). Stand der Sperrenstift 18 direkt vor einem defekten Verriegelungsvorsprung 14', wird der Sperrenstift 18" vor dem defekten Verriegelungsvorsprung 14' positioniert und nochmals getestet. Ist der Drehwinkel δ_{Test} dann nochmals größer oder gleich 150°, so ist der Sperrentest nicht bestanden, d. h. die mechanische Sperre kann keine ausreichende Blockierwirkung mehr gewährleisten. Die momentane Ist-Lage des Rotors 9a wird mittels Hall-Sensoren 20 als Hall-Bitmuster H1 bis H6 ermittelt und mit einer bei dem Verriegeln abgespeicherten Ist-Lage des Rotors 9a, d. h. mit einem Hall-Bitmuster H1 bis H6 verglichen. Bei Vorhandensein einer Differenz zwischen der momentanen Ist-Lage des Rotors 9a und dessen bei dem Verriegeln abgespeicherten Ist-Lage wird in einem ersten Fall, wenn die Differenz kleiner oder gleich einem vorgegebenen dritten Schwellwert, nämlich 15°, ist, diese Differenz zu der bei dem Verriegeln abgespeicherten Ist-Lage des Rotors 9a addiert oder in einem zweiten Fall, wenn die Differenz größer als der vorgegebene dritte Schwellwert ist, eine Initialisierungsfahrt durchgeführt. Wie weiter aus Fig. 3 ersichtlich, kann es durch mechanische Toleranzen zu einer Änderung des Hall-Bitmusters H1 bis H6 kommen, auch wenn das System verriegelt ist, da keine feste mechanische Zuordnung von Hall-Bitmustern zu Verriegelungsaussparungen 13 vorgesehen ist. Dies geschieht insbesondere dann, wenn bei einem verriegelten System einer der Hall-Sensoren 20 exakt auf der Grenze zwischen zwei Polen N, S des Sensormagnetrings 19 zu stehen kommt. Diese tolerierte Änderung des Hall-Bitmusters H1 bis H6 kann dabei allerdings nur einer Winkeländerung, welche kleiner oder gleich 15° ist, entsprechen.

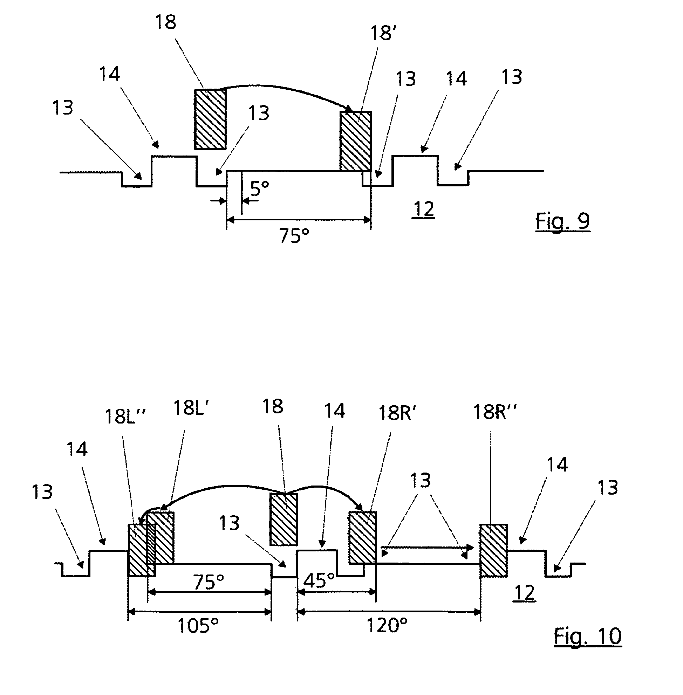

Wie auch beim Sperrentest, erfolgt eine Verriegelung des Systems immer abwechselnd auf die linke und die rechte Seite, um eine gleichmäßige Belastung der mechanischen Komponenten zu gewährleisten. Die Richtung, in welche verriegelt wurde, wird daher in einem Speicherbereich des Steuergeräts 11 des Überlagerungslenksystems bzw. in einem EEPROM abgelegt. Diese Information wird auch anschließend von dem Sperrentest verwendet. Beim Verriegeln der mechanischen Sperre soll sichergestellt werden, dass der Sperren stift 18 nicht in der Nähe eines Verriegelungsvorsprungs 14 abgesetzt wird. Daher soll der Rotor 9a vorher positioniert werden, dass sich kein Verriegelungsvorsprung 14 und keine Verriegelungsaussparung 13 unter dem Sperrenstift 18 befindet. Dazu muss allerdings wenigstens die Ist-Lage des Rotors 9a nach einem erfolgreichen Sperrentest bekannt sein. Dadurch ist die Position einer der sechs Verriegelungsaussparungen 13 bekannt, da davon ausgegangen werden kann, dass sich der Sperrenstift 18 nach erfolgreichem Sperrentest in einer der Verriegeiungsaussparungen 13 befindet. Der Rotorlagewinkel in dieser Position wird als δ_{Rstart} bezeichnet, die aktuelle Position des Rotors 9a mit δ_{R}, Damit beschreibt δ_{Rlock} = (δ_{R} - δ_{>Rstart})%120° den Abstand zur nächsten sicher bekannten Verriegelungsaussparutig 13. In den Figuren 8 und 9 ist der Sperrenstift vor der Positionierung mit dem Bezugszeichen 18 und nach der Positionierung bzw. dem Absetzen mit dem Bezugszeichen 18'versehen. Da grundsätzlich nicht bekannt ist, ob die aktuelle Verriegelungsaussparung 13 links oder rechts von dem Verriegelungsvorsprung 14 liegt, muss, um den Sperrenstift 18 im Bereich einer Erhebung 17 in den Sperrenring 12 einzubringen, folgendes gelten:

2-15°= 30° <|δ_{RLock}|< 75° = 5.15° (Bedingung 1)

Ist die Bedingung 1 nicht erfüllt, muss der Rotor 9a derart verfahren werden, bis gilt |δ_{RLock}| = 45°. Dabei können folgende Randbedingungen zusätzlich beachtet werden. Der gesamte Verfahrweg zur Verriegelung sollte nicht mehr als 120° betragen. Des weiteren sollte die Positionierung möglichst in dieselbe Richtung erfolgen, in die auch verriegelt wird.

Grundsätzlich ist Bedingung 1 erfüllt, da der Abstand zweier gleichartiger Verriegelungsaussparungen 13 (d. h. auf derselben Seite ihres jeweiligen Verriegelungsvorsprungs 14 gelegene Verriegelungsaussparungen 13) 120° beträgt. Im schlimmsten Fall ist der Abstand zur nächsten sicher bekannten Verriegelungsaussparung 120°. In diesem Fall muss der Rotor 9a, um die Bedingung |δ_{RLock}| = 45° zu erfüllen, um 45° in positive Richtung bzw. 120°- 45 ° = 75° in die negative Richtung bewegt werden (siehe Sperrenstifte 18L' und 18R' in Fig. 10). Anschließend wird sich der Rotor 9a beim Verriegeln nach rechts noch um 75° bewegen, womit sich eine Endposition 18R" ergibt und nach links um 30°, womit sich eine Endposition 18L" ergibt, Ist die Bedingung 1 erfüllt, so kann der Sperrenstift 18 fallen gelassen bzw. in den Sperrenring 12 eingebracht werden. Um den Sperren stift 18 sicher in einer Verriegelungsaussparung 13 zu positionieren, wird aus einem Speicherbaustein bzw. EEPROM des Steuergeräts 11 die Richtung, in die beim letzten Klemmenzyklus verriegelt wurde, ausgelesen. Die Verriegelung in dem aktuellen Klemmenzyklus erfolgt dann in die entgegengesetzte Richtung. Das Vorgehen bei dem Verriegelungsverfahren ist dasselbe wie bei dem Sperrentest. Ist der Rotor 9a verriegelt, muss die Richtung der Positionierung in einem Speicherbaustein des Steuergeräts 11 abgelegt werden. Des weiteren muss in dem Speicherbaustein des Steuergeräts 11 die Information abgelegt werden, dass das System korrekt verriegelt wurde. Um eine Bewegung des Sperrenstiftes 18 innerhalb der Verriegelungsaussparung 13 zu erkennen, muss das aktuell erkannte Hall-Bitmuster H1 bis H6 im Speicherbaustein abgespeichert werden, nachdem das System als verriegelt erkannt wurde. Eine weitere Änderung des Hall-Bitmusters H1 bis H6 darf keinen Einfluss mehr auf den abzuspeichernden Motor-Ist-Winkel bzw. die Ist-Lage des Rotors 9a haben. Dazu kann gleichzeitig der iViotor-fst-Winkel und das Hall-Bitmuster H1 bis H6 abgespeichert werden. Werden Hall-Bitmuster und Motor-Ist-Winkei nicht als ein Wertepaar gespeichert, besteht die Gefahr, dass es über die Lebensdauer des Steuergeräts 11 zu einem Wegdriften des Elektromotors 9 kommt, z. B. um 15° pro Klemmenwechsel. Bei dem erfindungsgemäßen Verfahren zur gezielten Verriegelung der mechanischen Sperre des Elektromotors 9, wobei der Rotor 9a des Elektromotors 9 einen Sperrenring 12 mit Verriegelungsvorsprürigeri 14 und Verriegelungsaussparungen 13 aufweist, in welchen ein angepasster fixierbarer Sperrenstift 18 des Elektromotors 9 zur Realisierung der mechanischen Sperre einbringbar ist, wird in einem ersten Schritt der Rotor 9a derart positioniert, dass sich der einzubringende Sperrenstift 18 nicht im Bereich eines Verriegelungsvorsprungs 14 oder einer Verriegelungsaussparung 13 des Sperrenrings 12 befindet, wobei zur Positionierung die mittels eines Verfahrens zur Prüfung des Verriegelungszustands ermittelte Rotorlage verwendet wird, wonach in einem zweiten Schritt der Sperrenstift 18 in den Sperrenring 12 eingebracht und der Rotor 9a fixiert wird. Bei jeder wiederholten Durchführung des Verfahrens wird jeweils die entgegengesetzte Verriegelungsrichtung des Rotors 9a gewählt, wobei die aktuell gewählte Verriegelungsrichtung abgespeichert wird. Ebenso wird die momentane Ist-Lage des Rotors, d. h. das Hall-Bitmuster H1 bis H6 abgespeichert.

Die erfindungsgemäßen Verfahren sind vorzugsweise im Rahmen eines Verfahrens zum Betrieb eines Überlagerungslenksystems 1 vorzugsweise als Computerprogramm auf dem Steuergerät 11 realisiert, wobei auch andere Lösungen selbstverständlich in Frage kommen. Dazu ist das Computerprogramm in einem Speicherelement des Steuergeräts 11 gespeichert. Durch Abarbeitung auf einem Mikroprozessor des Steuergeräts 11 wird das Verfahren ausgeführt. Das Computerprogramm kann auf einem nicht dargestellten computerlesbaren Datenträger (Diskette, CD, DVD, Festplatte, USB-Memot-ystick oder dergleichen) oder einem Internetserver als Computerprogrammprodukt gespeichert sein und von dort aus in das Speicherelement des Steuergeräts 11 übertragen werden.

### Bezugszeichen

- 1: Überlagerungslenksystem
- 2: Lenkrad
- 3: Gelenkwelle / Lenksäule
- 4: Lenkgetriebe
- 5a,5b: lenkbare Räder
- 6: Zahnstange
- 7: Ritzel
- 8: Überlagerungsmittel
- 9: Zusatzwinkelsteller / Elektromotor
- 9a: Rotor
- 10: Überlagerungsgetriebe
- 11: elektronisches Steuergerät der Überlagerungsmittel
- 12: Sperrenring
- 13: Verriegelungsaussparungen
- 14, 14': Verriegelungsvorsprünge
- 15: Doppelpfeil
- 16: Kurze Kante der Verriegelungsaussparung
- 17: Erhebungen
- 18, 18'. 18",: Sperrenstift in unterschiedlichen Positionen
- 18R',18R",: Sperrenstift in unterschiedlichen Positionen
- 18L', 18L": Sperrenstift in unterschiedlichen Positionen
- 19: Magnetring
- 20: Hall-Sensoren
- α, β, γ: Winkel
- δ_{Fm}: Radlenkwinkel bzw. Lenkwinkel
- δ_{G}: Ritzelwinkel
- δ_{S}: Lenkradwinkel
- δ_{M}: Zusatzwinkel
- δ_{Md}: Sollwert des Zusatzwinkels
- δ_{Test}: Drehwinkel während des Sperrentests
- δ_{Rücklauf}: Rücklaufwinkel

## Patentansprüche

1. Verfahren zur Prüfung eines Verriegelungszustands einer mechanischen Sperre eines Elektromotors (9), welcher als Überlagerungswinkelsteller in einem Überlagerungslenksystem ausgebildet ist, wobei der Rotor (9a) des Elektromotors (9) einen Sperrenring (12) mit Verriegelungsvorsprüngen (14) und Verriegelungsaussparungen (13) aufweist, in welchen ein angepasster fixierbarer Sperrenstift (18) des Elektromotors (9) zur Realisierung der mechanischen Sperre einbringbar ist, **dadurch gekennzeichnet, dass** zur Prüfung des Verriegelungszustands der mechanischen Sperre bei eingebrachtem Sperrenstift (18) versucht wird, den Rotor (9a) in einer vorgegebenen Drehrichtung solange in eine neue Soll-Lage zu drehen bis sich eine ermittelte Ist-Lage des Rotors (9a) trotz Anforderung einer neuen Soll-Lage des Rotors (9a) nicht mehr verändert und der Motorstrom des Elektromotors (9) größer oder gleich einem vorgegebenen Motorstromschwellwert ist, wobei die momentane Ist-Lage des Rotors (9a) laufend ermittelt wird, wobei ein korrekter Verriegelungszustand erkannt wird, falls die während der Drehung des Rotors (9a) entstandene Änderung der Ist-Lage des Rotors (9a) betragsmäßig kleiner als ein vorgegebener erster Schwellwert ist und wobei ein fehlerhafter Verriegelungszustand erkannt wird, falls die während der Drehung des Rotors (9a) entstandene Änderung der Ist-Lage des Rotors (9a) betragsmäßig größer oder gleich einem vorgegebenen zweiten Schwellwert ist.

2. Verfahren nach Anspruch 1, **dadurch gekennzeichnet, dass**, falls die während der Drehung des Rotors (9a) entstandene Änderung der Ist-Lage des Rotors (9a) betragsmäßig größer oder gleich dem ersten Schwellwert und kleiner als der zweite Schwellwert ist, der Sperrenstift (18) aus dem Sperrenring (12) entfernt wird, wonach der Rotor (9a) entgegen der vorgegebenen Drehrichtung um wenigstens annähernd 180° zurückgedreht wird, wonach der Sperrenstift (18) erneut in den Sperrenring (12) eingebracht wird und wonach das Verfahren erneut durchgeführt wird.

3. Verfahren nach Anspruch 1 oder 2, **dadurch gekennzeichnet, dass** die momentane Ist-Lage des Rotors (9a) mittels eines Rotorlagesensors, insbesondere mittels Hall-Sensoren (20) als Hall-Bitmuster (H1 bis H6) ermittelt und mit einer bei dem Verriegeln abgespeicherten Ist-Lage des Rotors (9a), insbesondere einem Hall-Bitmuster (H1 bis H6) verglichen wird.

4. Verfahren nach Anspruch 3, **dadurch gekennzeichnet, dass** bei Vorhandensein einer Differenz zwischen der momentanen Ist-Lage des Rotors (9a) und dessen bei dem Verriegeln abgespeicherter Ist-Lage
- in einem ersten Fall, wenn die Differenz kleiner oder gleich einem vorgegebenen dritten Schwellwert ist, die Differenz zu der bei dem Verriegeln abgespeicherten Ist-Lage des Rotors (9a) addiert wird, oder
- in einem zweiten Fall, wenn die Differenz größer als der vorgegebene dritte Schwellwert ist, eine Initialisierung des Überlagerungslenksystems durchgeführt wird.

5. Verfahren nach einem der Ansprüche 1 bis 4, **dadurch gekennzeichnet, dass** der vorgegebene Motorstromschwellwert der maximale Motorstrom des Elektromotors (9) ist.

6. Verfahren nach einem der Ansprüche 1 bis 5, **dadurch gekennzeichnet, dass** bei jeder wiederholten Durchführung des Verfahrens jeweils die entgegengesetzte Drehrichtung des Rotors (9a) gewählt wird, welche aus einer bei dem Verriegeln abgespeicherten Verriegelungsrichtung des Elektromotors (9) bestimmt wird.

7. Verfahren nach einem der Ansprüche 1 bis 6, **dadurch gekennzeichnet, dass** nach einer Erkennung eines korrekten Verriegelungszustands, die momentane Ist-Lage des Rotors (9a), welche der Position einer Verriegelungsaussparung entspricht, ermittelt und abgespeichert wird.

8. Verfahren zur gezielten Verriegelung einer mechanischen Sperre eines Elektromotors (9), welcher als Überlagerungswinkelsteller in einem Überlagerungslenksystem (1) ausgebildet ist, wobei ein Rotor (9a) des Elektromotors (9) einen Sperrenring (12) mit Verriegelungsvorsprüngen (14) und Verriegelungsaussparungen (13) aufweist, in welchen ein angepasster fixierbarer Sperrenstift (18) des Elektromotors (9) zur Realisierung der mechanischen Sperre einbringbar ist, **dadurch gekennzeichnet, dass**
- in einem ersten Schritt der Rotor (9a) derart positioniert wird, dass sich der einzubringende Sperrenstift (18) nicht im Bereich eines Verriegelungsvorsprungs (14) oder einer Verriegelungsaussparung (13) des Sperrenrings (12) befindet, wobei zur Positionierung die, insbesondere mittels eines Verfahrens zur Prüfung des Verriegelungszustands nach Anspruch 7 ermittelte Rotorlage verwendet wird, wonach
- in einem zweiten Schritt der Sperrenstift (18) in den Sperrenring (12) eingebracht und der Rotor fixiert wird.

9. Verfahren nach Anspruch 8, **dadurch gekennzeichnet, dass** bei jeder wiederholten Durchführung des Verfahrens jeweils die entgegengesetzte Verriegelungsrichtung des Rotors (9a) gewählt wird, wobei die aktuell gewählte Verriegelungsrichtung abgespeichert wird.

10. Verfahren nach Anspruch 8 oder 9, **dadurch gekennzeichnet, dass** die momentane Ist-Lage des Rotors (9a), insbesondere als Hall-Bitmuster (H1 bis H6) abgespeichert wird.

11. Verfahren nach einem der Ansprüche 1 bis 10, **dadurch gekennzeichnet, dass** an dem Sperrenring (12) drei Verriegelungsvorsprünge (14) in einem Abstand von jeweils 120° zueinander angeordnet sind, wobei auf beiden Seiten der jeweiligen Verriegelungsvorsprünge (14) jeweils eine Verriegelungsaussparung (13) angeordnet ist.

12. Computerprogramm mit Programmcodemitteln, um ein Verfahren gemäß einem der Ansprüche 1 bis 11 durchzuführen, wenn dass Programm auf einem Mikroprozessor eines Computers, insbesondere auf einem Steuergerät (11) eines Überlagerungslenksystems (1), ausgeführt wird.

13. Computerprogrammprodukt mit Programmcodemitteln, die auf einem computerlesbaren Datenträger gespeichert sind, um ein Verfahren gemäß einem der Ansprüche 1 bis 11 durchzuführen, wenn dass Programm auf einem Mikroprozessor eines Computers, insbesondere auf einem Steuergerät (11) eines Überlagerungslenksystems (1), ausgeführt wird.

14. Überlagerungslenksystem (1) eines Kraftfahrzeugs, mit
- einer Lenkhandhabe (2) zur Vorgabe eines Lenkradwinkels (δs) als Maß für einen gewünschten Radlenkwinkel (δ_{Fm}) für wenigstens ein lenkbares Rad (5a,5b) des Kraftfahrzeugs,
- einem Lenkgetriebe (4), welches den Lenkradwinkel (δs) in den Radlenkwinkel (δ_{Fm}) des wenigstens einen lenkbaren Rades (5a,5b) des Kraftfahrzeugs umsetzt,
- Überlagerungsmitteln (8) zur Erzeugung eines Überlagerungswinkels (δ_{M}) durch einen Überlagerungswinkelsteller (9) und zur Erzeugung eines Eingangswinkels (δ_{G}) des Lenkgetriebes (4) aus einer Überlagerung des Lenkradwinkels (δₛ) mit dem Überlagerungswinkel (δ_{M}), und
- einem elektronischen Steuergerät (11) eingerichtet zur Ausführung des Computerprogramms gemäß Anspruch 12.

## Claims

1. Method for checking a locking state of a mechanical lock of an electric motor (9) which is in the form of a superimposition angle adjuster in a variable gear ratio steering system, with the rotor (9a) of the electric motor (9) having a lock ring (12) with locking projections (14) and locking cutouts (13) into which a lock pin (18), which can be fixed in an appropriate manner, of the electric motor (9) can be inserted in order to realize the mechanical lock, **characterized in that**, in order to check the locking state of the mechanical lock when the lock pin (18) is inserted, an attempt is made to rotate the rotor (9a) in a predefined direction of rotation into a new setpoint position until an ascertained actual position of the rotor (9a) no longer changes in spite of a demand for a new setpoint position of the rotor (9a), and the motor current of the electric motor (9) is greater than or equal to a predefined motor current threshold value, with the instantaneous actual position of the rotor (9a) being continuously ascertained, with a correct locking state being identified if the magnitude of the change in the actual position of the rotor (9a) which is produced during the rotation of the rotor (9a) is lower than a predefined first threshold value, and with a faulty locking state being identified if the magnitude of the change in the actual position of the rotor (9a) which is produced during the rotation of the rotor (9a) is greater than or equal to a predefined second threshold value.

2. Method according to Claim 1, **characterized in that** if the magnitude of the change in the actual position of the rotor (9a) which is produced during the rotation of the rotor (9a) is greater than or equal to the first threshold value and lower than the second threshold value, the lock pin (18) is removed from the lock ring (12), after which the rotor (9a) is rotated back through at least approximately 180° counter to the predefined direction of rotation, after which the lock pin (18) is re-inserted into the lock ring (12) and after which the method is carried out again.

3. Method according to Claim 1 or 2, **characterized in that** the instantaneous actual position of the rotor (9a) is ascertained by means of a rotor position sensor, in particular by means of Hall sensors (20), as Hall bit patterns (H1 to H6), and is compared with an actual position of the rotor (9a), in particular a Hall bit pattern (H1 to H6), which is stored during the locking operation.

4. Method according to Claim 3, **characterized in that** when there is a difference between the instantaneous actual position of the rotor (9a) and the actual position of the said rotor which is stored during the locking operation
- in a first case, if the difference is lower than or equal to a predefined third threshold value, the difference is added to the actual position of the rotor (9a) which is stored during the locking operation, or
- in a second case, if the difference is greater than the predefined third threshold value, initialization of the variable gear ratio steering system is carried out.

5. Method according to one of Claims 1 to 4, **characterized in that** the predefined motor current threshold value is the maximum motor current of the electric motor (9).

6. Method according to one of Claims 1 to 5, **characterized in that** each time the method is repeated, that opposite direction of rotation of the rotor (9a) is selected in each case, this direction of rotation being determined from a locking direction of the electric motor (9) which is stored during the locking operation.

7. Method according to one of Claims 1 to 6, **characterized in that** after a correct locking state is identified, the instantaneous actual position of the rotor (9a), which position corresponds to the position of a locking cutout, is ascertained and stored.

8. Method for the targeted locking of a mechanical lock of an electric motor (9) which is in the form of a superimposition angle adjuster in a variable gear ratio steering system (1), with a rotor (9a) of the electric motor (9) having a lock ring (12) with locking projections (14) and locking cutouts (13) into which a lock pin (18), which can be fixed in an appropriate manner, of the electric motor (9) can be inserted in order to realize the mechanical lock, **characterized in that**
- in a first step, the rotor (9a) is positioned in such a way that the lock pin (18) which is to be inserted is not located in the region of a locking projection (14) or a locking cutout (13) of the lock ring (12), with the rotor position which is ascertained, in particular, by means of a method for checking the locking state according to Claim 7 being used for positioning purposes, after which
- in a second step, the lock pin (18) is inserted into the lock ring (12) and the rotor is fixed.

9. Method according to Claim 8, **characterized in that** each time the method is repeated, the opposite locking direction of the rotor (9a) is selected in each case, with the currently selected locking direction being stored.

10. Method according to Claim 8 or 9, **characterized in that** the instantaneous actual position of the rotor (9a) is stored, in particular, as a Hall bit pattern (H1 to H6).

11. Method according to one of Claims 1 to 10, **characterized in that** three locking projections (14) are arranged at a distance of in each case 120° from one another on the lock ring (12), with in each case one locking cutout (13) being arranged on the two sides of the respective locking projections (14).

12. Computer program with program coding means, in order to carry out a method according to one of Claims 1 to 11 when the program is run on a microprocessor of a computer, in particular on a controller (11) of a variable gear ratio steering system (1).

13. Computer program product with program coding means which are stored on a computer-readable data storage medium, in order to carry out a method according to one of Claims 1 to 11 when the program is run on a microprocessor of a computer, in particular on a controller (11) of a variable gear ratio steering system (1).

14. Variable gear ratio steering system (1) of a motor vehicle, having
- a steering handle (2) for predefining a steering wheel angle (δₛ) as a measure of a desired wheel steering angle (δ_{Fm}) for at least one steerable wheel (5a, 5b) of the motor vehicle,
- a steering mechanism (4) which converts the steering wheel angle (δₛ) into the wheel steering angle (δ_{Fm}) of the at least one steerable wheel (5a, 5b) of the motor vehicle,
- superimposition means (8) for generating a superimposition angle (δ_{M}) using a superimposition angle adjuster (9) and for generating an input angle (δ_{G}) of the steering mechanism (4) from superimposition of the superimposition angle (δ_{M}) on the steering wheel angle (δₛ) , and
- an electronic controller (11) which is designed to implement the computer program according to Claim 12.

## Revendications

1. Procédé de vérification d'un état de verrouillage d'un blocage mécanique d'un moteur électrique (9) prenant la forme d'un dispositif de réglage d'angle de braquage dans un système de direction de braquage, le rotor (9a) du moteur électrique (9) comportant une bague de blocage (12) équipée de saillies de verrouillage (14) et d'évidements de verrouillage (13) dans lesquels peut être amené une tige de blocage (18) fixable adaptée du moteur électrique (9) pour la réalisation du blocage mécanique, **caractérisé en ce que** pour vérifier l'état de verrouillage du blocage mécanique lorsque la tige de blocage (18) est rentrée, on essaie de faire tourner le rotor (9a) dans un sens de rotation prédéfini jusque dans une nouvelle position théorique, jusqu'à ce qu'une position réelle calculée du rotor (9a) ne puisse plus changer malgré la demande d'une nouvelle position théorique du rotor (9a), et que le courant moteur du moteur électrique (9) est supérieur ou égal à une valeur seuil de courant moteur prédéfinie, la position réelle momentanée du rotor (9a) étant calculée en fonctionnement, un état de verrouillage correct étant reconnu lorsque le changement de position réelle du rotor (9a) survenu pendant la rotation du rotor (9a) est inférieur en quantité à une première valeur seuil prédéfinie et un état de verrouillage anormal étant reconnu lorsque le changement de position réelle du rotor (9a) survenu pendant la rotation du rotor (9a) est supérieur ou égal en quantité à une seconde valeur seuil prédéfinie.

2. Procédé selon la revendication 1, **caractérisé en ce que** lorsque le changement de position réelle du rotor (9a) survenu pendant la rotation du rotor (9a) est supérieur ou égal en quantité à la première valeur seuil et inférieur à la deuxième valeur seuil, la tige de blocage (18) s'écarte de la bague de blocage (12), suivie du pivotement en arrière du rotor (9a) d'au moins environ 180° dans le sens contraire du sens de rotation prédéfini, à la suite de quoi la tige de blocage (18) est à nouveau introduite dans la bague de blocage (12) et le procédé recommencé.

3. Procédé selon la revendication 1 ou 2, **caractérisé en ce que** la position réelle momentanée du rotor (9a) est calculée à l'aide d'un capteur de position de rotor, notamment à l'aide de capteurs de Hall (20) prenant la forme d'une configuration binaire de Hall (H1 à H6) et comparée à une position réelle du rotor (9a) mémorisée lors du verrouillage, notamment une configuration binaire de Hall (H1 à H6).

4. Procédé selon la revendication 3, **caractérisé en ce qu'**en présence d'une différence entre la position réelle momentanée du rotor (9a) et sa position réelle mémorisée lors du verrouillage :
- la différence par rapport à la position réelle du rotor (9a) mémorisée lors du verrouillage est additionnée dans un premier cas dans lequel la différence est inférieure ou égale à une troisième valeur seuil prédéfinie ; ou
- une initialisation du système de direction de braquage est réalisée dans un second cas dans lequel la différence est supérieure à la troisième valeur seuil prédéfinie.

5. Procédé selon l'une quelconque des revendications 1 à 4, **caractérisé en ce que** la valeur seuil de courant moteur prédéfinie correspond au courant moteur maximal du moteur électrique (9).

6. Procédé selon l'une quelconque des revendications 1 à 5, **caractérisé en ce qu'**à chaque mise en oeuvre répétée du procédé, le sens de rotation opposé du rotor (9a) est respectivement sélectionné, celui-ci étant déterminé à partir d'une direction de verrouillage du moteur électrique (9) mémorisée lors du verrouillage.

7. Procédé selon l'une quelconque des revendications 1 à 6, **caractérisé en ce qu'**après reconnaissance d'un état de verrouillage correct, la position réelle momentanée du rotor (9a) correspondant à la position d'un évidement de verrouillage est calculée puis mémorisée.

8. Procédé de verrouillage ciblé d'un blocage mécanique d'un moteur électrique (9) prenant la forme d'un dispositif de réglage d'angle de braquage dans un système de direction de braquage (1), un rotor (9a) du moteur électrique (9) comportant une bague de blocage (12) équipée de saillies de verrouillage (14) et d'évidements de verrouillage (13) dans lesquels peut être amené une tige de blocage (18) fixable adaptée du moteur électrique (9) pour la réalisation du blocage mécanique, **caractérisé en ce que** :
- lors d'une première étape, le rotor (9a) est positionné de telle sorte que la tige de blocage (18) à introduire ne se trouve pas dans la zone d'une saillie de verrouillage (14) ou d'un évidement de verrouillage (13) de la bague de blocage (12), le positionnement du rotor utilisant notamment l'état de verrouillage calculé à l'aide d'un procédé de vérification selon la revendication 7 ;
- lors d'une deuxième étape, la tige de blocage (18) est introduite dans la bague de blocage (12) et le rotor fixé.

9. Procédé selon la revendication 8, **caractérisé en ce qu'**à chaque mise en oeuvre répétée du procédé, la direction de verrouillage opposée du rotor (9a) est respectivement sélectionnée et que la direction de verrouillage actuellement sélectionnée est mémorisée.

10. Procédé selon la revendication 8 ou 9, **caractérisé en ce que** la position réelle momentanée du rotor (9a) est mémorisée, notamment sous la forme d'une configuration binaire de Hall (H1 à H6).

11. Procédé selon l'une quelconque des revendications 1 à 10, **caractérisé en ce que** trois saillies de verrouillage (14) sont respectivement disposées à une distance de respectivement 120° les unes par rapport aux autres au niveau de la bague de blocage (12), un évidement de verrouillage (13) étant respectivement disposé sur les deux côtés des saillies de verrouillage (14) respectives.

12. Programme informatique doté de moyens de codage de programme permettant de mettre en oeuvre un procédé selon l'une quelconque des revendications 1 à 11 lorsque le programme est réalisé sur un microprocesseur d'un ordinateur, notamment sur un appareil de commande (11) d'un système de direction de braquage (1).

13. Produit de programme informatique équipé de moyens de codage de programme mémorisés sur un support de données lisible par ordinateur, pour mettre en oeuvre un procédé selon l'une quelconque des revendications 1 à 11 lorsque le programme est réalisé sur un microprocesseur d'un ordinateur, notamment sur un appareil de commande (11) d'un système de direction de braquage (1).

14. Système de direction de braquage (1) d'un véhicule automobile, équipé :
- d'une poignée de pilotage (2) permettant de définir un angle de volant de direction (δₛ) sous la forme d'une mesure pour un angle de direction de roue (δ_{Fm}) souhaité pour au moins une roue motrice (5a, 5b) du véhicule automobile ;
- d'un mécanisme de direction (4) transformant l'angle de volant de direction (δₛ) en un angle de direction de roue (δ_{Fm}) de l'au moins une roue motrice (5a, 5b) du véhicule automobile ;
- de moyens de braquage (8) permettant de réaliser un angle de braquage (δ_{M}) par le biais d'un dispositif de réglage d'angle de braquage (9) et de réaliser un angle d'attaque (δ_{G}) du mécanisme de direction (4) à partir d'un braquage de l'angle de volant de direction (δₛ) avec l'angle de braquage (δ_{M}) ; et
- d'un appareil de commande électronique (11) conçu pour réaliser le programme informatique selon la revendication 12.
